# EUROPEAN PATENT SPECIFICATION

(11) **EP 4 173 407 B1**
(45) Date of publication and mention of the grant of the patent: **13.08.2025**
(21) Application number: 21742671.7
(22) Date of filing: 24.06.2021
(51) Int. Cl.: H04W 72/04, H04W 72/20, H04W 72/51

(54) **LOCATION-BASED CHANNEL OCCUPANCY SHARING FOR SIDELINK COMMUNICATION IN UNLICENSED SPECTRUM**
STANDORTBASIERTE KANALBELEGUNGSTEILUNG FÜR SIDELINK-KOMMUNIKATION IN EINEM UNLIZENZIERTEN SPEKTRUM
PARTAGE D'OCCUPATION DE CANAL BASÉ SUR UNE LOCALISATION POUR UNE COMMUNICATION DE LIAISON LATÉRALE DANS UN SPECTRE SANS LICENCE

(30) Priority: 24.06.2020 GR 20200100369
(43) Date of publication of application: 03.05.2023
(73) Proprietor: Qualcomm Incorporated, San Diego, CA 92121-1714 (US)
(72) Inventor: WU, Shuanshuan, San Diego, CA 92121 (US); ZHANG, Xiaoxia, San Diego, CA 92121 (US); GAAL, Peter, San Diego, CA 92121 (US); GUBESKYS, Arthur, San Diego, CA 92121 (US); LUO, Tao, San Diego, CA 92121 (US); SUN, Jing, San Diego, CA 92121 (US); STEFANATOS, Stelios, San Diego, CA 92121 (US); MONTOJO, Juan, San Diego, CA 92121 (US); PATIL, Shailesh, San Diego, CA 92121 (US); MARSH, Gene, Wesley, San Diego, CA 92121 (US)
(74) Representative: Bardehle Pagenberg Partnerschaft mbB Patentanwälte Rechtsanwälte
(86) International application number: PCT/US2021/070769
(87) International publication number: WO 2021/263283

(56) References cited:
- EP-A1- 2 983 432
- US-A1- 2019 261 413
- QUALCOMM INCORPORATED: "TxOP Frame Structure for NR unlicensed", vol. RAN WG1, no. Gothenburg, Sweden; 20180820 - 20180824, 17 August 2018 (2018-08-17), pages 1 - 10, XP051516838, Retrieved from the Internet <URL:http://www.3gpp.org/ftp/tsg%5Fran/WG1%5FRL1/TSGR1%5F94/Docs/R1%2D1809476%2Ezip> [retrieved on 20180817]

## Description

### FIELD OF THE DISCLOSURE

Aspects of the present disclosure generally relate to wireless communication and to techniques and apparatuses for location-based channel occupancy sharing for sidelink communication in unlicensed spectrum.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. NR, which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

3GPP contribution "TxOP Frame Structure for NR unlicensed" by Qualcomm Incorporated, R1-1809476, provides some high-level views on the frame structure, SCS, and physical layer procedures for NR unlicensed. Both LBE and FBE devices are considered. US 2019/0261413 A1 relates to the use of a Device-to-Device (D2D) sidelink, e.g., in a licensed spectrum, to assist with clear channel assessment in an unlicensed spectrum. A method of operation of a wireless device in a cellular communications network comprises performing a sidelink-assisted clear channel assessment (SLA-CCA) procedure to determine whether to transmit on an unlicensed channel. The SLA-CCA procedure is a Clear Channel Assessment (CCA) procedure that is assisted by information received by the wireless device from one or more other wireless devices over a D2D sidelink in a licensed spectrum. The method further comprises, upon determining to transmit on the unlicensed channel as a result of performing the SLA-CCA procedure, transmitting a transmission on the unlicensed channel.

### SUMMARY

A user equipment (UE) may use channel sensing procedures to determine whether resources in a channel are available for communication. If the UE determines that a channel is available for channel occupancy (e.g., after performing a successful listen-before-talk (LBT) procedure), the UE may determine a channel occupancy time (COT) for the channel. The COT may represent an amount of time during which the UE may occupy the channel. However, the UE may not continuously occupy a channel for transmission, but the UE may be configured to use the channel for at least a portion of the COT (e.g., a period of time that is less than a threshold duration). Resources that a UE may use during a COT may span a plurality of slots and may include one or more resource blocks or frequency resources in each slot.

However, in some communication systems, such as in communication systems enabling vehicle-to-everything (V2X) communication, interference may occur despite a use of channel sensing to initiate channel occupancy and to reserve resources. As an example, a first UE may initiate a channel occupancy associated with a COT, and a second UE may decode a transmission from the first UE and obtain information regarding the COT. In this case, the second UE may share resources of the channel occupancy with the first UE without causing interference. However, a third UE may detect a transmission from the second UE, obtain information regarding the channel occupancy, and also attempt to share resources of the channel occupancy. In this case, the third UE may be sufficiently far from the first UE that a reservation of resources for the channel occupancy by the first UE is not applicable to the third UE. In other words, the first UE may determine that a particular resource is available in its area, but the third UE may be subject to interference, in the particular resource, that was undetectable to the first UE (e.g., a fourth UE or another device may have reserved the particular resource far enough from the first UE as to avoid interference between the first UE and the fourth UE, but close enough to the third UE to cause interference). The invention is defined by the appended claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of sidelink communications, in accordance with the present disclosure.
Fig. 4 is a diagram illustrating an example of sidelink communications and access link communications, in accordance with the present disclosure.
Fig. 5 is a diagram illustrating an example associated with location-based channel occupancy sharing for sidelink communication in unlicensed spectrum, in accordance with the present disclosure.
Fig. 6 is a diagram illustrating an example process associated with location-based channel occupancy sharing for sidelink communication in unlicensed spectrum, in accordance with the present disclosure.
Fig. 7 is a diagram of an example apparatus for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

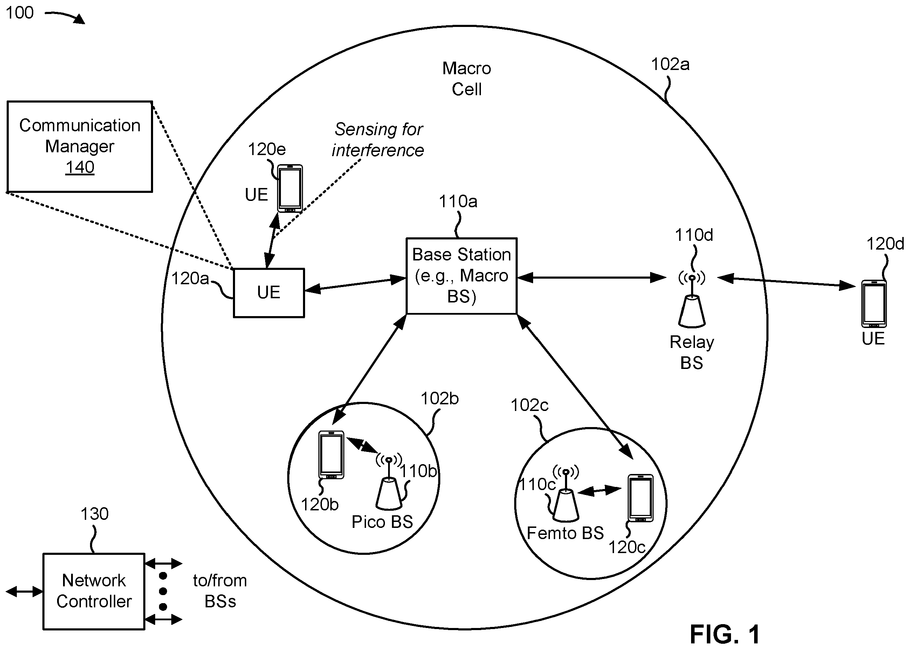

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. For example, multiple UEs 120 may be within a threshold proximity of each other, such that each UE 120 is to use a channel sensing procedure to sense interference from each other UE 120 and selectively reserve resources for sidelink communication with other UEs 120. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, the UE 120 may include a communication manager 140. As described in more detail elsewhere herein, the communication manager 140 may receive information identifying a shared channel occupancy for a packet transmission resource; determine a range metric for the shared channel occupancy based at least in part on location information; determine whether to share the shared channel occupancy for packet transmission using the packet transmission resource based at least in part on the range metric; and selectively transmit one or more packets in the shared channel occupancy based at least in part on a result of determining whether to share the shared channel occupancy. Additionally, or alternatively, the communication manager 140 may perform one or more other operations described herein.

As indicated above, Fig. 1 is provided as an example. Other examples may differ from what is described with regard to Fig. 1.

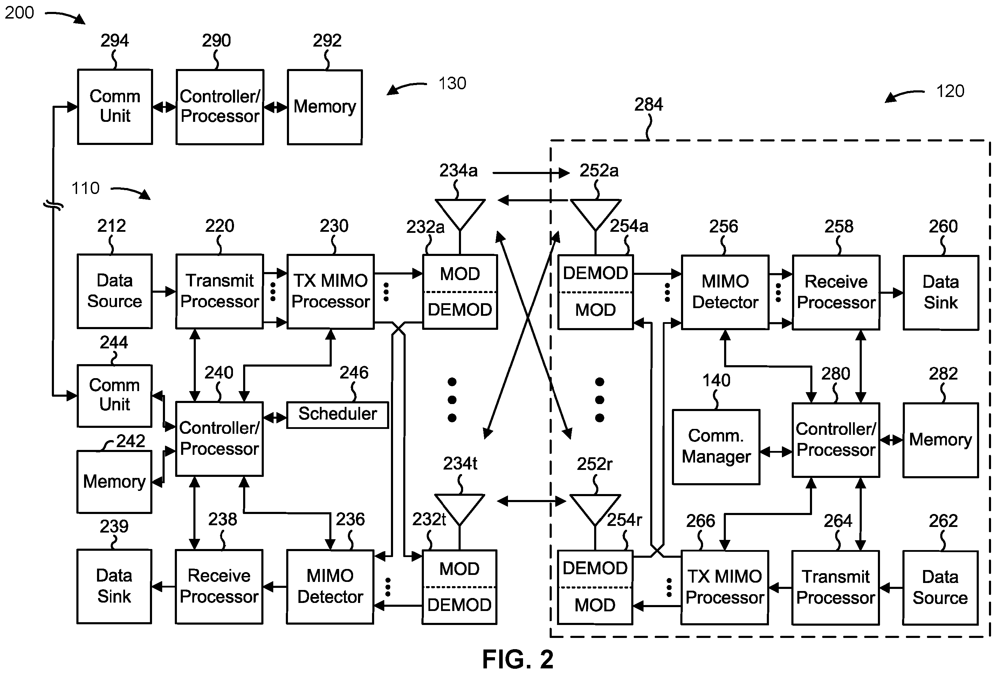

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas *(T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The UE 120 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., R received signals) to a set of modems 254 (e.g., R modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

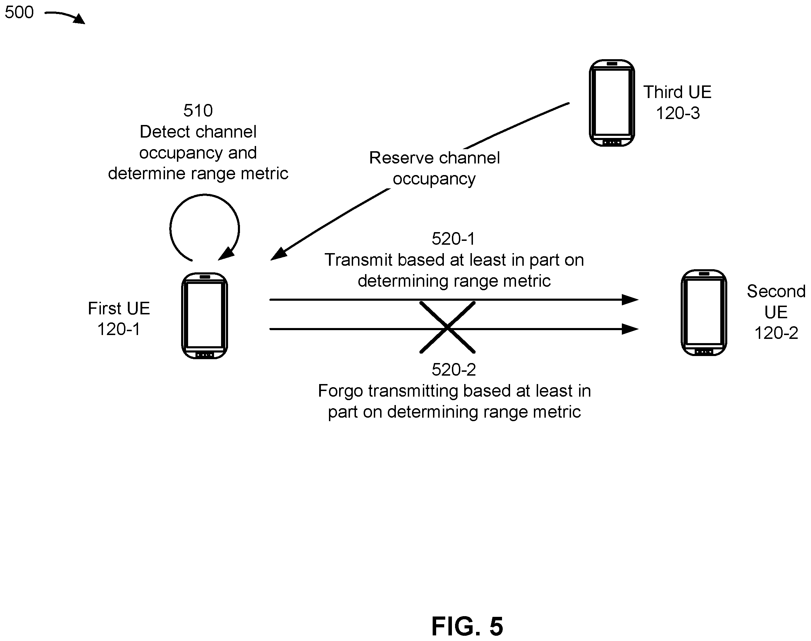

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 5-7).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 5-7).

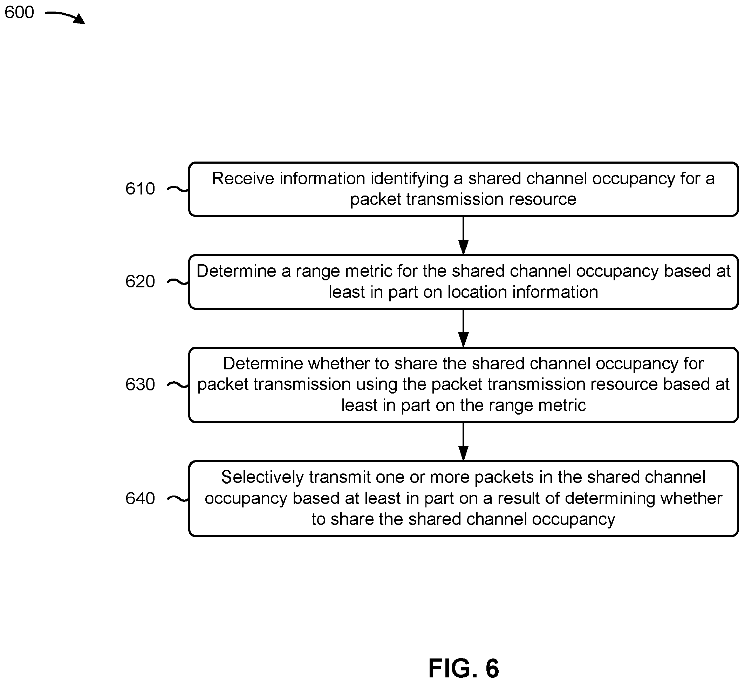

The controller/processor 240 of the base station 110, the controller/processor 280 of the UE 120, and/or any other component(s) of Fig. 2 may perform one or more techniques associated with location-based channel occupancy sharing for sidelink communications in unlicensed spectrum, as described in more detail elsewhere herein. For example, the controller/processor 240 of the base station 110, the controller/processor 280 of the UE 120, and/or any other component(s) of Fig. 2 may perform or direct operations of, for example, process 600 of Fig. 6 and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 600 of Fig. 6 and/or other processes as described herein. In some examples, executing instructions may include running the instructions, converting the instructions, compiling the instructions, and/or interpreting the instructions, among other examples.

In some aspects, the UE includes means for receiving information identifying a shared channel occupancy for a packet transmission resource; means for determining a range metric for the shared channel occupancy based at least in part on location information; means for determining whether to share the shared channel occupancy for packet transmission using the packet transmission resource based at least in part on the range metric; and/or means for selectively transmitting one or more packets in the shared channel occupancy based at least in part on a result of determining whether to share the shared channel occupancy. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

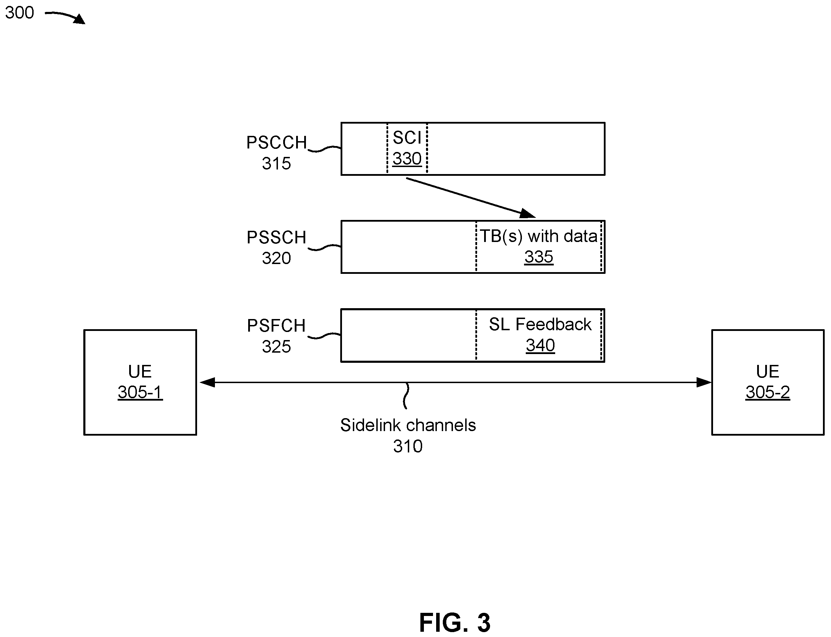

Fig. 3 is a diagram illustrating an example 300 of sidelink communications, in accordance with various aspects of the present disclosure.

As shown in Fig. 3, a first UE 305-1 may communicate with a second UE 305-2 (and one or more other UEs 305) via one or more sidelink channels 310. The UEs 305-1 and 305-2 may communicate using the one or more sidelink channels 310 for P2P communications, D2D communications, V2X communications (e.g., which may include V2V communications, V2I communications, V2P communications, and/or the like), mesh networking, and/or the like. In some aspects, the UEs 305 (e.g., UE 305-1 and/or UE 305-2) may correspond to one or more other UEs described elsewhere herein, such as UE 120. In some aspects, the one or more sidelink channels 310 may use a PC5 interface and/or may operate in a high frequency band (e.g., the 5.9 gigahertz (GHz) band). Additionally, or alternatively, the UEs 305 may synchronize timing of transmission time intervals (TTIs) (e.g., frames, subframes, slots, symbols, and/or the like) using global navigation satellite system (GNSS) timing.

As further shown in Fig. 3, the one or more sidelink channels 310 may include a physical sidelink control channel (PSCCH) 315, a physical sidelink shared channel (PSSCH) 320, and/or a physical sidelink feedback channel (PSFCH) 325. The PSCCH 315 may be used to communicate control information, similar to a physical downlink control channel (PDCCH) and/or a physical uplink control channel (PUCCH) used for cellular communications with a base station 110 via an access link or an access channel. The PSSCH 320 may be used to communicate data, similar to a physical downlink shared channel (PDSCH) and/or a physical uplink shared channel (PUSCH) used for cellular communications with a base station 110 via an access link or an access channel. For example, the PSCCH 315 may carry sidelink control information (SCI) 330, which may indicate various control information used for sidelink communications, such as one or more resources (e.g., time resources, frequency resources, spatial resources, and/or the like) where a transport block (TB) 335 may be carried on the PSSCH 320. The TB 335 may include data. The PSFCH 325 may be used to communicate sidelink feedback 340, such as hybrid automatic repeat request (HARQ) feedback (e.g., acknowledgement or negative acknowledgement (ACK/NACK) information), transmit power control (TPC), a scheduling request (SR), and/or the like.

The one or more sidelink channels 310 may use resource pools. For example, a scheduling assignment (e.g., included in SCI 330) may be transmitted in sub-channels using specific resource blocks (RBs) across time. Data transmissions (e.g., on the PSSCH 320) associated with a scheduling assignment may occupy adjacent RBs in the same subframe as the scheduling assignment (e.g., using frequency division multiplexing). A scheduling assignment and associated data transmissions are not transmitted on adjacent RBs.

A UE 305 may operate using a transmission mode where resource selection and/or scheduling is performed by the UE 305 (e.g., rather than a base station 110). The UE 305 may perform resource selection and/or scheduling by sensing channel availability for transmissions. For example, the UE 305 may measure an RSSI parameter (e.g., a sidelink-RSSI (S-RSSI) parameter) associated with various sidelink channels, may measure an RSRP parameter (e.g., a PSSCH-RSRP parameter) associated with various sidelink channels, may measure an RSRQ parameter (e.g., a PSSCH-RSRQ parameter) associated with various sidelink channels, and/or the like, and may select a channel for transmission of a sidelink communication based at least in part on the measurement(s). As described in more detail herein, the UE 305 may also use a location metric to determine whether to select a resource on a channel in connection with sensing for channel availability.

The UE 305 may perform resource selection and/or scheduling using SCI 330 received in the PSCCH 315, which may indicate occupied resources, channel parameters, and/or the like. The UE 305 may perform resource selection and/or scheduling by determining a channel busy ratio (CBR) associated with various sidelink channels, which may be used for rate control (e.g., by indicating a maximum number of resource blocks that the UE 305 can use for a particular set of subframes).

In the transmission mode where resource selection and/or scheduling is performed by a UE 305, the UE 305 may generate sidelink grants, and may transmit the grants in SCI 330. A sidelink grant may indicate, for example, one or more parameters (e.g., transmission parameters) to be used for an upcoming sidelink transmission, such as one or more resource blocks to be used for the upcoming sidelink transmission on the PSSCH 320 (e.g., for TBs 335), one or more subframes to be used for the upcoming sidelink transmission, an MCS to be used for the upcoming sidelink transmission, and/or the like. A sidelink grant may include an indication of a location to which the sidelink grant is applicable, which may enable downstream propagation of resource availability (e.g., within an area associated with the location to which the sidelink grant is applicable). A UE 305 may generate a sidelink grant that indicates one or more parameters for semi-persistent scheduling (SPS), such as a periodicity of a sidelink transmission. The UE 305 may generate a sidelink grant for event-driven scheduling, such as for an on-demand sidelink message.

As indicated above, Fig. 3 is provided as an example. Other examples may differ from what is described with respect to Fig. 3.

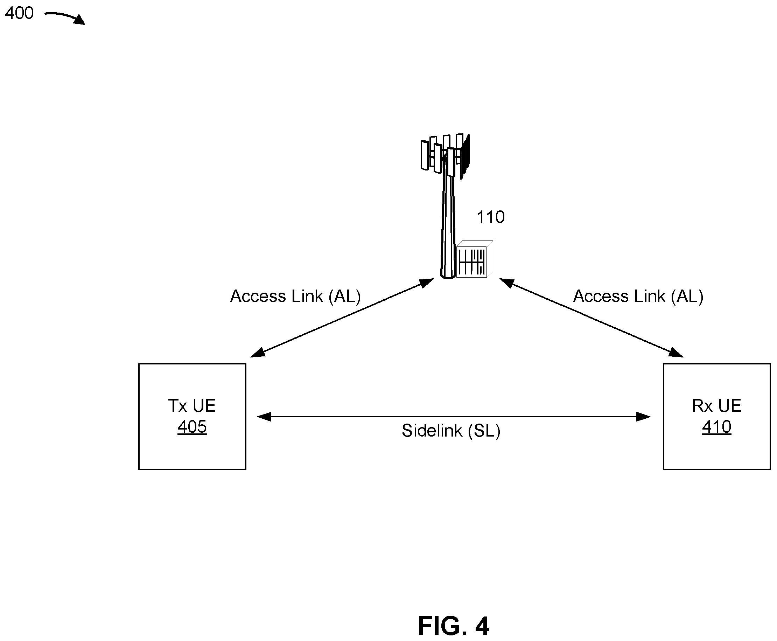

Fig. 4 is a diagram illustrating an example 400 of sidelink communications and access link communications, in accordance with various aspects of the present disclosure.

As shown in Fig. 4, a transmitter (Tx) UE 405 and a receiver (Rx) UE 410 may communicate with one another via a sidelink, as described above in connection with Fig. 3. As further shown, in some sidelink modes, a base station 110 may communicate with the Tx UE 405 via a first access link. Additionally, or alternatively, in some sidelink modes, the base station 110 may communicate with the Rx UE 410 via a second access link. The Tx UE 405 and/or the Rx UE 410 may correspond to one or more UEs described elsewhere herein, such as the UE 120 of Fig. 1. Thus, a direct link between UEs 120 (e.g., via a PC5 interface) may be referred to as a sidelink, and a direct link between a base station 110 and a UE 120 (e.g., via a Uu interface) may be referred to as an access link. Sidelink communications may be transmitted via the sidelink, and access link communications may be transmitted via the access link. An access link communication may be either a downlink communication (from a base station 110 to a UE 120) or an uplink communication (from a UE 120 to a base station 110).

As indicated above, Fig. 4 is provided as an example. Other examples may differ from what is described with respect to Fig. 4.

As described above, in some communications systems, such as when unlicensed spectrum and Wi-Fi or other technologies are co-located in a common area using common communication resources (e.g., sharing the unlicensed spectrum), UEs may use channel sensing procedures to determine whether resources in a channel are available for communication. For example, a UE may perform a listen-before-talk (LBT) procedure to determine whether another UE or another device is intending to transmit using a particular transmission opportunity. In an LBT procedure, the UE may perform channel sensing to determine whether a channel is associated with less than a threshold level of energy, to determine whether the UE can transmit on the channel without interfering with other communications. If the UE determines that a channel is available for channel occupancy (e.g., after performing a successful LBT procedure), the UE may determine a channel occupancy time (COT) for the channel. The UE may not continuously occupy a channel for transmission, but is configured to use the channel for a COT that is less than a threshold duration.

A channel occupancy may include resources spanning a plurality of slots (e.g., 20 slots) and including one or more resource blocks, frequency resources, and/or the like in each slot. A UE or a base station may initiate channel occupancy for a COT using a channel sensing procedure, such as LBT (for example, a Type-1 channel access procedure). However, in some scenarios, such as in communication systems enabling V2X communication, interference may occur despite a use of channel sensing to initiate channel occupancy and to reserve resources. As an example, a first UE may initiate a channel occupancy associated with a COT, and a second UE may decode a transmission from the first UE and obtain information regarding the COT. In this case, the second UE may share resources of the channel occupancy with the first UE without causing interference. However, a third UE may detect a transmission from the second UE, obtain information regarding the channel occupancy, and also attempt to share resources of the channel occupancy. In this case, the third UE may be sufficiently far from the first UE that a reservation of resources for the channel occupancy by the first UE is not applicable to the third UE. In other words, the first UE may determine that a particular resource is available in its area, but the third UE may be subject to interference, in the particular resource, that was undetectable to the first UE (e.g., a fourth UE or another device may have reserved the particular resource far enough from the first UE as to avoid interference between the first UE and the fourth UE, but close enough to the third UE to cause interference).

Some aspects described herein provide for location-based channel occupancy sharing for sidelink communication in unlicensed spectrum. For example, when a first UE determines that a shared channel occupancy is detected, the first UE may determine a range metric that may correspond to a distance between a first location of the first UE and a second location of a second UE that initiated the shared channel occupancy (which may or may not be a UE from which the first UE identified the shared channel occupancy). In this case, based at least in part on the range metric, the first UE may avoid transmitting in the shared channel occupancy, may transmit in the shared channel occupancy using a default configuration, may transmit in the shared channel occupancy using an altered configuration (e.g., a reduced power), may perform a channel sensing procedure to determine whether to transmit in the shared channel, and/or the like.

Fig. 5 is a diagram illustrating an example 500 associated with location-based channel occupancy sharing for sidelink communication in unlicensed spectrum, in accordance with various aspects of the present disclosure. As shown in Fig. 5, example 500 includes a set of UEs 120, such as a first UE 120-1, a second UE 120-2, a third UE 120-3, and/or the like.

As further shown in Fig. 5, and by reference number 510, first UE 120-1 may detect a channel occupancy and may determine a range metric. For example, when first UE 120-1 has data for transmission, first UE 120-1 may determine whether resources are available. In this case, first UE 120-1 may perform a channel sensing procedure, and may determine that a channel occupancy has been initiated by, for example, third UE 120-3. For example, first UE 120-1 may decode one or more sidelink transmissions (e.g., SCI transmissions, such as first stage control information or second stage control information, or a medium access control (MAC) control element (CE) transmission) from third UE 120-3 and may determine that third UE 120-3 is occupying a channel for a particular COT. Additionally, or alternatively, first UE 120-1 may fail to detect a channel occupancy and may perform a channel sensing procedure (e.g., an LBT procedure, such as a Type-1 or Type-2 channel access procedure) to initiate a channel occupancy for transmission.

In some aspects, first UE 120-1 may determine a range metric associated with the channel occupancy. For example, based at least in part on decoding the one or more sidelink transmissions, first UE 120-1 may determine a location associated with the channel occupancy (e.g., a location of third UE 120-3, another UE that initiated the channel occupancy and with which third UE 120-3 is sharing the channel occupancy, and/or the like). In this case, first UE 120-1 may determine a location of first UE 120-1 relative to the location associated with the channel occupancy to determine the range metric. In some aspects, the range metric may be based at least in part on a location zone. For example, first UE 120-1 may determine a zone identifier included in COT information received from third UE 120-3 and may determine the range metric based at least in part on a distance between first UE 120-1 and a zone identified by the zone identifier. Additionally, or alternatively, first UE 120-1 may determine the range metric based at least in part on whether first UE 120-1 and third UE 120-3 are in a common zone. In other words, in some aspects, the range metric may represent whether UEs are in the same zone, neighboring zones, and/or the like. In some aspects, first UE 120-1 may determine the range metric based at least in part on a combination of factors, such as based at least in part on a location of first UE 120-1, a location of another UE 120, a location zone, or a presence of a plurality of UEs 120 in the zone, among other examples.

As further shown in Fig. 5, and by reference numbers 520-1 and 520-2, first UE 120-1 may selectively transmit data to second UE 120-2 based at least in part on determining the range metric. For example, when first UE 120-1 determines that the range metric satisfies a threshold (e.g., first UE 120-1 is within a threshold proximity of third UE 120-3, so a channel sensing procedure performed by third UE 120-3 to initiate the channel occupancy is applicable to first UE 120-1), first UE 120-1 may share the channel occupancy with third UE 120-3. In this case, first UE 120-1 may transmit in the shared channel occupancy, for example, using a set of default parameters, such as a default transmit power. In some aspects, first UE 120-1 may determine the range threshold based at least in part on COT information determined based at least in part on decoding sidelink transmissions from third UE 120-3. For example, transmissions from third UE 120-3 may carry the range threshold. Additionally, or alternatively, first UE 120-1 may determine the range threshold based at least in part on a configured value, a pre-configured value, a value defined in a specification, and/or the like. In some aspects, transmissions from third UE 120-3 may convey information that first UE 120-1 may use, in combination with stored information, to determine the range threshold and/or whether the range metric satisfies the range threshold.

In another example, first UE 120-1 may determine that the range metric does not satisfy the threshold (e.g., first UE 120-1 is not within a threshold proximity of third UE 120-1 or another UE that initiated the channel occupancy). In this case, first UE 120-1 may determine not to transmit using the channel occupancy and may initiate a channel sensing procedure (e.g., an LBT procedure) to initiate another channel occupancy, as described in more detail below. Additionally, or alternatively, first UE 120-1 may determine to transmit using the channel occupancy, but with a reduced transmit power to avoid interference with other UEs or devices that may have reserved other channel occupancies. For example, first UE 120-1 may reduce a transmit power by a pre-configured amount, by an amount defined in a specification, and/or the like. Additionally, or alternatively, first UE 120-1 may reduce the transmit power based at least in part on the range metric. For example, first UE 120-1 may reduce a transmit power based at least in part on a distance between first UE 120-1 and third UE 120-3 and/or a UE that initiated the shared channel occupancy. In some aspects, first UE 120-1 may determine to perform a combination of response actions, such as transmitting with a reduced transmit power and with one or more other changes to a transmission configuration.

In some aspects, first UE 120-1 may determine whether another condition is satisfied in order to determine whether to transmit in the shared channel occupancy. For example, when a priority associated to the packet that first UE 120-1 is to transmit satisfies a threshold priority, first UE 120-1 may transmit the packet using the shared channel occupancy despite the range metric not satisfying the threshold. Additionally, or alternatively, first UE 120-1 may determine whether a channel congestion level satisfies a congestion threshold (e.g., whether a measured CBR satisfies a CBR threshold). In this case, when the measured channel congestion is less than the congestion threshold, first UE 120-1 may determine to use the shared channel occupancy for transmission.

When first UE 120-1 determines that the range metric is not satisfied, first UE 120-1 may perform an LBT procedure (e.g., a Category-2 LBT or a type-2 channel access procedure without random back-off), in some aspects. In this case, based at least in part on success of the LBT procedure, transmit in a shared channel occupancy. For example, first UE 120-1 may perform the LBT procedure during a transmission gap (e.g., at a beginning or end of a slot) and transmit in the shared COT if the LBT procedure is successful (e.g., when a measured energy during the gap is less than a threshold). In other words, first UE 120-1 may perform an LBT procedure (e.g., Category-4 or Type-1 LBT with random back-off) when first UE 120-1 is not to share a COT so that first UE 120-1 may initiate another COT, or may perform an LBT procedure to share a COT, as described above.

In some aspects, first UE 120-1 may perform a channel sensing procedure based at least in part on determining that the range metric does not satisfy the threshold. For example, first UE 120-1 may perform wide-band or sub-band energy detection based channel sensing (e.g., LBT, like Type 1 or Type 2 channel access procedures as defined in 3GPP). In some aspects, first UE 120-1 may perform a Type-2 channel access procedure (e.g., a Category-2 LBT procedure or an LBT procedure without random back-off), Type-1 channel access procedure (e.g., a Category-4 LBT procedure or an LBT procedure with random back-off), and/or the like. In this case, if the channel sensing procedure is successful (e.g., first UE 120-1 performs a Type-1 channel access procedure and determines that the channel access procedure is successful), first UE 120-1 may transmit a sidelink transmission with channel occupancy information (e.g., which may include location information, COT duration information, a quantity of slots or resources in the COT, a range threshold for location sharing, and/or the like) to initiate the channel occupancy.

As indicated above, Fig. 5 is provided as an example. Other examples may differ from what is described with respect to Fig. 5.

Fig. 6 is a diagram illustrating an example process 600 performed, for example, by a UE, in accordance with various aspects of the present disclosure. Example process 600 is an example where the UE (e.g., UE 120, UE 305, UE 405, UE 410, and/or the like) performs operations associated with location-based channel occupancy sharing for sidelink communication in unlicensed spectrum.

As shown in Fig. 6, in some aspects, process 600 may include receiving information identifying a shared channel occupancy for a packet transmission resource (block 610). For example, the UE (e.g., using receive processor 258, transmit processor 264, controller/processor 280, memory 282, and/or the like) may receive information identifying a shared channel occupancy for a packet transmission resource, as described above.

As further shown in Fig. 6, in some aspects, process 600 may include determining a range metric for the shared channel occupancy based at least in part on location information (block 620). For example, the UE (e.g., using receive processor 258, transmit processor 264, controller/processor 280, memory 282, and/or the like) may determine a range metric for the shared channel occupancy based at least in part on location information, as described above.

As further shown in Fig. 6, in some aspects, process 600 may include determining whether to share the shared channel occupancy for packet transmission using the packet transmission resource based at least in part on the range metric (block 630). For example, the UE (e.g., using receive processor 258, transmit processor 264, controller/processor 280, memory 282, and/or the like) may determine whether to share the shared channel occupancy for packet transmission using the packet transmission resource based at least in part on the range metric, as described above.

As further shown in Fig. 6, in some aspects, process 600 may include selectively transmitting one or more packets in the shared channel occupancy based at least in part on a result of determining whether to share the shared channel occupancy (block 640). For example, the UE (e.g., using receive processor 258, transmit processor 264, controller/processor 280, memory 282, and/or the like) may selectively transmit one or more packets in the shared channel occupancy based at least in part on a result of determining whether to share the shared channel occupancy, as described above.

Process 600 may include additional aspects, such as any single aspect or any combination of aspects described below and/or in connection with one or more other processes described elsewhere herein.

In a first aspect, the information identifying the shared channel occupancy is received in a sidelink transmission from another UE.

In a second aspect, alone or in combination with the first aspect, the location information includes information identifying at least one of a location of the UE or a location of another UE that initiated the shared channel occupancy.

In a third aspect, alone or in combination with one or more of the first and second aspects, determining whether to share the shared channel occupancy comprises: determining whether the range metric satisfies a range threshold, and determining whether to share the shared channel occupancy based at least in part on determining whether the range metric satisfies the range threshold.

In a fourth aspect, alone or in combination with one or more of the first through third aspects, process 600 includes performing a channel sensing procedure to initiate another shared channel occupancy based at least in part on the result of determining whether to share the shared channel occupancy.

In a fifth aspect, alone or in combination with one or more of the first through fourth aspects, process 600 includes reducing a transmission power for transmitting the one or more packets based at least in part on the result of determining whether to share the shared channel occupancy.

In a sixth aspect, alone or in combination with one or more of the first through fifth aspects, determining whether to share the shared channel occupancy comprises: determining whether to share the shared channel occupancy based at least in part on the transmission priority or the congestion level.

In a seventh aspect, alone or in combination with one or more of the first through sixth aspects, selectively transmitting the one or more packets comprises determining to transmit the one or more packets based at least in part on performing the channel sensing procedure.

In an eighth aspect, alone or in combination with one or more of the first through seventh aspects, the channel sensing procedure is at least one of: a sub-band listen-before-talk procedure, a listen-before-talk procedure with random backoff, or a listen-before-talk procedure without random backoff.

In a ninth aspect, alone or in combination with one or more of the first through eighth aspects, the location information includes a zone identifier.

In a tenth aspect, alone or in combination with one or more of the first through ninth aspects, the information identifying the shared channel occupancy includes information identifying a threshold for the range metric.

In an eleventh aspect, alone or in combination with one or more of the first through tenth aspects, a threshold for the range metric is a pre-configured threshold.

In a twelfth aspect, alone or in combination with one or more of the first through eleventh aspects, selectively transmitting one or more packets in the shared channel occupancy includes transmitting the location information associated with the shared channel occupancy in connection with transmitting the one or more packets

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

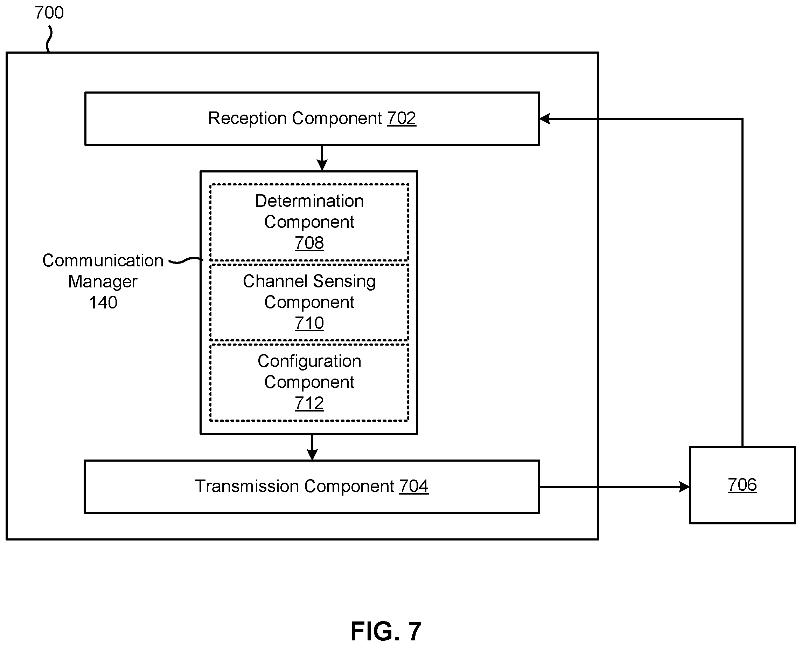

Fig. 7 is a diagram of an example apparatus 700 for wireless communication. The apparatus 700 may be a UE, or a UE may include the apparatus 700. In some aspects, the apparatus 700 includes a reception component 702 and a transmission component 704, which may be in communication with one another (for example, via one or more buses and/or one or more other components). As shown, the apparatus 700 may communicate with another apparatus 706 (such as a UE, a base station, or another wireless communication device) using the reception component 702 and the transmission component 704. As further shown, the apparatus 700 may include the communication manager 140. The communication manager 140 may include one or more of a determination component 708, a channel sensing component 710, or a configuration component 712, among other examples.

In some aspects, the apparatus 700 may be configured to perform one or more operations described herein in connection with Fig. 5. Additionally, or alternatively, the apparatus 700 may be configured to perform one or more processes described herein, such as process 600 of Fig. 6 or a combination thereof. In some aspects, the apparatus 700 and/or one or more components shown in Fig. 7 may include one or more components of the UE described in connection with Fig. 2. Additionally, or alternatively, one or more components shown in Fig. 7 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 702 may receive communications, such as reference signals, control information, data communications, or a combination thereof, from the apparatus 706. The reception component 702 may provide received communications to one or more other components of the apparatus 700. In some aspects, the reception component 702 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 706. In some aspects, the reception component 702 may include one or more antennas, a modem, a demodulator, a MIMO detector, a receive processor, a controller/processor, a memory, or a combination thereof, of the UE described in connection with Fig. 2.

The transmission component 704 may transmit communications, such as reference signals, control information, data communications, or a combination thereof, to the apparatus 706. In some aspects, one or more other components of the apparatus 706 may generate communications and may provide the generated communications to the transmission component 704 for transmission to the apparatus 706. In some aspects, the transmission component 704 may perform signal processing on the generated communications (such as filtering, amplification, modulation, digital-to-analog conversion, multiplexing, interleaving, mapping, or encoding, among other examples), and may transmit the processed signals to the apparatus 706. In some aspects, the transmission component 704 may include one or more antennas, a modem, a modulator, a transmit MIMO processor, a transmit processor, a controller/processor, a memory, or a combination thereof, of the UE described in connection with Fig. 2. In some aspects, the transmission component 704 may be co-located with the reception component 702 in a transceiver.

The reception component 702 may receive information identifying a shared channel occupancy for a packet transmission resource. The determination component 708 may determine a range metric for the shared channel occupancy based at least in part on location information. The determination component 708 may determine whether to share the shared channel occupancy for packet transmission using the packet transmission resource based at least in part on the range metric. The transmission component 704 may selectively transmit one or more packets in the shared channel occupancy based at least in part on a result of determining whether to share the shared channel occupancy.

The channel sensing component 710 may perform a channel sensing procedure to initiate another shared channel occupancy based at least in part on the result of determining whether to share the shared channel occupancy. The configuration component 712 may reduce a transmission power for transmitting the one or more packets based at least in part on the result of determining whether to share the shared channel occupancy. The determination component 708 may determine a transmission priority or congestion level. The channel sensing component 710 may perform a channel sensing procedure.

The number and arrangement of components shown in Fig. 7 are provided as an example. In practice, there may be additional components, fewer components, different components, or differently arranged components than those shown in Fig. 7. Furthermore, two or more components shown in Fig. 7 may be implemented within a single component, or a single component shown in Fig. 7 may be implemented as multiple, distributed components. Additionally, or alternatively, a set of (one or more) components shown in Fig. 7 may perform one or more functions described as being performed by another set of components shown in Fig. 7.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method of wireless communication performed by a user equipment, UE, comprising:
receiving (610) information identifying a shared channel occupancy for a packet transmission resource, wherein the information identifying the shared channel occupancy is received in a sidelink transmission from another UE, wherein the information includes location information identifying at least one of a location of the UE or a location of another UE that initiated the shared channel occupancy;
determining (620) a range metric for the shared channel occupancy based at least in part on the location information;
determining (630) whether to share the shared channel occupancy for packet transmission using the packet transmission resource based at least in part on the range metric; and
selectively (640) transmitting one or more packets in the shared channel occupancy based at least in part on a result of determining whether to share the shared channel occupancy.

2. The method of claim 1, wherein determining whether to share the shared channel occupancy comprises:
determining whether the range metric satisfies a range threshold; and
determining whether to share the shared channel occupancy based at least in part on determining whether the range metric satisfies the range threshold.

3. The method of claim 1, further comprising:
performing a channel sensing procedure to initiate another shared channel occupancy based at least in part on the result of determining whether to share the shared channel occupancy.

4. The method of claim 1, further comprising:
reducing a transmission power for transmitting the one or more packets based at least in part on the result of determining whether to share the shared channel occupancy.

5. The method of claim 1, further comprising:
determining a transmission priority or congestion level; and
wherein determining whether to share the shared channel occupancy comprises:
determining whether to share the shared channel occupancy based at least in part on the transmission priority or the congestion level.

6. The method of claim 1, further comprising:
performing a channel sensing procedure; and
wherein selectively transmitting the one or more packets comprises:
determining to transmit the one or more packets based at least in part on performing the channel sensing procedure.

7. The method of claim 6, wherein the channel sensing procedure is at least one of:
a sub-band listen-before-talk procedure,
a listen-before-talk procedure with random backoff, or
a listen-before-talk procedure without random backoff.

8. The method of claim 1, wherein the location information includes a zone identifier.

9. The method of claim 1, wherein the information identifying the shared channel occupancy includes information identifying a threshold for the range metric.

10. The method of claim 1, wherein a threshold for the range metric is a pre-configured threshold.

11. The method of claim 1, wherein selectively transmitting one or more packets in the shared channel occupancy comprises:
transmitting the location information associated with the shared channel occupancy in connection with transmitting the one or more packets.

12. A computer program comprising instructions for performing a method according to any of claims 1 to 11 when executed by a processor of a user equipment, UE.

13. A user equipment, UE, for wireless communication, comprising:
means for receiving (702) information identifying a shared channel occupancy for a packet transmission resource, wherein the information identifying the shared channel occupancy is received in a sidelink transmission from another UE, wherein the information includes location information identifying at least one of a location of the UE or a location of another UE that initiated the shared channel occupancy;
means for determining (708) a range metric for the shared channel occupancy based at least in part on the location information;
means for determining (710) whether to share the shared channel occupancy for packet transmission using the packet transmission resource based at least in part on the range metric; and
means for selectively transmitting (704) one or more packets in the shared channel occupancy based at least in part on a result of determining whether to share the shared channel occupancy.

14. The UE according to claim 13, further comprising means for performing the method according to any of claims 2 to 11.

## Patentansprüche

1. Verfahren zur drahtlosen Kommunikation, das von einem Benutzergerät, UE, durchgeführt wird, umfassend:
Empfangen (610) von Information, die eine gemeinsam genutzte Kanalbelegung für eine Paketübertragungsressource identifiziert, wobei die Information, die die gemeinsam genutzte Kanalbelegung identifiziert, in einer Sidelink-Übertragung von einem anderen UE empfangen wird, wobei die Standortinformation Standortinformation beinhaltet, die mindestens einen von einem Standort des UE oder einem Standort eines anderen UE identifiziert, das die gemeinsam genutzte Kanalbelegung initiiert hat;
Bestimmen (620) einer Bereichsmetrik für die gemeinsam genutzte Kanalbelegung basierend mindestens teilweise auf der Standortinformation;
Bestimmen (630), ob die gemeinsam genutzte Kanalbelegung zur Paketübertragung unter Verwendung der Paketübertragungsressource gemeinsam genutzt werden soll, basierend mindestens teilweise auf der Bereichsmetrik; und
selektives (640) Übertragen eines oder mehrerer Pakete in der gemeinsam genutzten Kanalbelegung basierend mindestens teilweise auf einem Ergebnis des Bestimmens, ob die gemeinsam genutzte Kanalbelegung gemeinsam genutzt werden soll.

2. Verfahren nach Anspruch 1, wobei das Bestimmen, ob die gemeinsam genutzte Kanalbelegung gemeinsam genutzt werden soll, umfasst:
Bestimmen, ob die Bereichsmetrik einen Bereichsschwellenwert erfüllt; und
Bestimmen, ob die gemeinsam genutzte Kanalbelegung gemeinsam genutzt werden soll, basierend mindestens teilweise auf dem Bestimmen, ob die Bereichsmetrik den Bereichsschwellenwert erfüllt.

3. Verfahren nach Anspruch 1, ferner umfassend:
Durchführen einer Kanalerfassungsprozedur, um eine andere gemeinsam genutzte Kanalbelegung zu initiieren, basierend mindestens teilweise auf dem Ergebnis des Bestimmens, ob die gemeinsam genutzte Kanalbelegung gemeinsam genutzt werden soll.

4. Verfahren nach Anspruch 1, ferner umfassend:
Reduzieren einer Übertragungsleistung zum Übertragen des einen oder der mehreren Pakete basierend mindestens teilweise auf dem Ergebnis des Bestimmens, ob die gemeinsam genutzte Kanalbelegung gemeinsam genutzt werden soll.

5. Verfahren nach Anspruch 1, ferner umfassend:
Bestimmen einer Übertragungspriorität oder eines Überlastungsniveaus; und
wobei das Bestimmen, ob die gemeinsam genutzte Kanalbelegung gemeinsam genutzt werden soll, umfasst:
Bestimmen, ob die gemeinsam genutzte Kanalbelegung gemeinsam genutzt werden soll, basierend mindestens teilweise auf der Übertragungspriorität oder dem Überlastungsniveau.

6. Verfahren nach Anspruch 1, ferner umfassend:
Durchführen einer Kanalerfassungsprozedur; und
wobei das selektive Übertragen des einen oder der mehreren Pakete umfasst:
Bestimmen, das eine oder die mehreren Pakete zu übertragen, basierend mindestens teilweise auf dem Durchführen der Kanalerfassungsprozedur.

7. Verfahren nach Anspruch 6, wobei die Kanalerfassungsprozedur mindestens eine ist von:
einer Subband-Listen-before-Talk-Prozedur,
einer Listen-before-Talk-Prozedur mit zufälligem Backoff, oder
einer Listen-before-Talk-Prozedur ohne zufälligen Backoff.

8. Verfahren nach Anspruch 1, wobei die Standortinformation eine Zonenkennung beinhaltet.

9. Verfahren nach Anspruch 1, wobei die Information, die die gemeinsam genutzte Kanalbelegung identifiziert, Information beinhaltet, die einen Schwellenwert für die Bereichsmetrik identifiziert.

10. Verfahren nach Anspruch 1, wobei ein Schwellenwert für die Bereichsmetrik ein vorkonfigurierter Schwellenwert ist.

11. Verfahren nach Anspruch 1, wobei das selektive Übertragen eines oder mehrerer Pakete in der gemeinsam genutzten Kanalbelegung umfasst:
Übertragen der Standortinformation, die mit der gemeinsam genutzten Kanalbelegung assoziiert ist, in Verbindung mit dem Übertragen des einen oder der mehreren Pakete.

12. Computerprogramm, umfassend Anweisungen zum Durchführen eines Verfahrens nach einem der Ansprüche 1 bis 11, wenn es von einem Prozessor eines Benutzergeräts, UE, ausgeführt wird.

13. Benutzergerät, UE, für drahtlose Kommunikation, umfassend:
Mittel zum Empfangen (702) von Information, die eine gemeinsam genutzte Kanalbelegung für eine Paketübertragungsressource identifiziert, wobei die Information, die die gemeinsam genutzte Kanalbelegung identifiziert, in einer Sidelink-Übertragung von einem anderen UE empfangen wird, wobei die Information Standortinformation beinhaltet, die mindestens einen von einem Standort des UE oder einem Standort eines anderen UE identifiziert, das die gemeinsam genutzte Kanalbelegung initiiert hat;
Mittel zum Bestimmen (708) einer Bereichsmetrik für die gemeinsam genutzte Kanalbelegung basierend mindestens teilweise auf der Standortinformation;
Mittel zum Bestimmen (710), ob die gemeinsam genutzte Kanalbelegung zur Paketübertragung unter Verwendung der Paketübertragungsressource gemeinsam genutzt werden soll, basierend mindestens teilweise auf der Bereichsmetrik; und Mittel zum selektiven Übertragen (704) eines oder mehrerer Pakete in der gemeinsam genutzten Kanalbelegung basierend mindestens teilweise auf einem Ergebnis des Bestimmens, ob die gemeinsam genutzte Kanalbelegung gemeinsam genutzt werden soll.

14. UE nach Anspruch 13, ferner umfassend Mittel zum Durchführen des Verfahrens nach einem der Ansprüche 2 bis 11.

## Revendications

1. Un procédé de communication sans fil réalisé par un équipement utilisateur, UE, comprenant :
la réception (610) d'une information identifiant une occupation de canal partagé pour une ressource de transmission de paquets, dans lequel l'information identifiant l'occupation de canal partagé est reçue dans une transmission sidelink provenant d'un autre UE, dans lequel l'information comporte une information de localisation identifiant au moins un parmi un emplacement de l'UE ou un emplacement d'un autre UE qui a initié l'occupation de canal partagé ;
la détermination (620) d'une métrique de portée pour l'occupation de canal partagé sur la base au moins en partie de l'information de localisation ;
la détermination (630) de partager ou non l'occupation de canal partagé pour la transmission de paquets en utilisant la ressource de transmission de paquets sur la base au moins en partie de la métrique de portée ; et
la transmission sélective (640) d'un ou plusieurs paquets dans l'occupation de canal partagé sur la base au moins en partie d'un résultat de la détermination de partager ou non l'occupation de canal partagé.

2. Le procédé selon la revendication 1, dans lequel la détermination de partager ou non l'occupation de canal partagé comprend :
la détermination si la métrique de portée satisfait ou non un seuil de portée ; et
la détermination de partager ou non l'occupation de canal partagé sur la base au moins en partie de la détermination si la métrique de portée satisfait ou non le seuil de portée.

3. Le procédé selon la revendication 1, comprenant en outre :
la réalisation d'une procédure de détection de canal pour initier une autre occupation de canal partagé sur la base au moins en partie du résultat de la détermination de partager ou non l'occupation de canal partagé.

4. Le procédé selon la revendication 1, comprenant en outre :
la réduction d'une puissance d'émission pour la transmission des un ou plusieurs paquets sur la base au moins en partie du résultat de la détermination de partager ou non l'occupation de canal partagé.

5. Le procédé selon la revendication 1, comprenant en outre :
la détermination d'une priorité de transmission ou d'un niveau de congestion ; et
dans lequel la détermination de partager ou non l'occupation de canal partagé comprend :
la détermination de partager ou non l'occupation de canal partagé sur la base au moins en partie de la priorité de transmission ou du niveau de congestion.

6. Le procédé selon la revendication 1, comprenant en outre :
la réalisation d'une procédure de détection de canal ; et
dans lequel la transmission sélective des un ou plusieurs paquets comprend :
la détermination de transmettre les un ou plusieurs paquets sur la base au moins en partie de la réalisation de la procédure de détection de canal.

7. Le procédé selon la revendication 6, dans lequel la procédure de détection de canal est au moins une parmi :
une procédure d'écoute avant d'émettre de sous-bande,
une procédure d'écoute avant d'émettre avec backoff aléatoire, ou
une procédure d'écoute avant d'émettre sans backoff aléatoire.

8. Le procédé selon la revendication 1, dans lequel l'information de localisation comporte un identifiant de zone.

9. Le procédé selon la revendication 1, dans lequel l'information identifiant l'occupation de canal partagé comporte une information identifiant un seuil pour la métrique de portée.

10. Le procédé selon la revendication 1, dans lequel un seuil pour la métrique de portée est un seuil préconfiguré.

11. Le procédé selon la revendication 1, dans lequel la transmission sélective d'un ou plusieurs paquets dans l'occupation de canal partagé comprend :
la transmission de l'information de localisation associée à l'occupation de canal partagé en relation avec la transmission des un ou plusieurs paquets.

12. Un programme de calculateur comprenant des instructions pour réaliser un procédé selon l'une des revendications 1 à 11, lorsqu'il est exécuté par un processeur d'un équipement utilisateur, UE.

13. Un équipement utilisateur, UE, pour la communication sans fil, comprenant :
un moyen pour recevoir (702) une information identifiant une occupation de canal partagé pour une ressource de transmission de paquets, dans lequel l'information identifiant l'occupation de canal partagé est reçue dans une transmission sidelink provenant d'un autre UE, dans lequel l'information comporte une information de localisation identifiant au moins un parmi un emplacement de l'UE ou un emplacement d'un autre UE qui a initié l'occupation de canal partagé ;
un moyen pour déterminer (708) une métrique de portée pour l'occupation de canal partagé sur la base au moins en partie de l'information de localisation ;
un moyen pour déterminer (710) de partager ou non l'occupation de canal partagé pour la transmission de paquets en utilisant la ressource de transmission de paquets sur la base au moins en partie de la métrique de portée ; et
un moyen pour transmettre de façon sélective (704) un ou plusieurs paquets dans l'occupation de canal partagé sur la base au moins en partie d'un résultat de la détermination de partager ou non l'occupation de canal partagé.

14. L'UE selon la revendication 13, comprenant en outre des moyens pour réaliser le procédé selon l'une des revendications 2 à 11.
